# NEUE EUROPÄISCHE PATENTSCHRIFT

(11) **EP 3 284 550 B2**
(45) Veröffentlichungstag und Bekanntmachung des Hinweises auf die Entscheidung über den Einspruch: **26.04.2023**
(45) Hinweis auf die Patenterteilung: 04.12.2019
(21) Anmeldenummer: 16001815.6
(22) Anmeldetag: 18.08.2016
(51) Int. Cl.: B22D 11/057

(54) **VERFAHREN ZUM HERSTELLEN EINER KOKILLE FÜR DAS STRANGGIESSEN VON METALLISCHEN PRODUKTEN, SOWIE EINE KOKILLE**
METHOD FOR PRODUCING A MOULD FOR CONTINUOUS CASTING OF METALLIC PRODUCTS, AND A MOULD
PROCEDE DE FABRICATION D'UNE LINGOTIERE POUR LA COULEE DE PRODUITS METALLIQUES ET LINGOTIERE

(43) Veröffentlichungstag der Anmeldung: 21.02.2018
(73) Patentinhaber: SMS Concast AG, 8027 Zürich (CH)
(72) Erfinder: Feldhaus, Stephan, CH-8610 Uster (CH); Gelke, Benjamin, CH-8635 Dürnten (CH); Mathews, Oliver, CH-8004 Zürich (CH); Heini, Flurin, CH-5430 Wettingen (CH)
(74) Vertreter: Luchs, Willi

(56) Entgegenhaltungen:
- EP-A1- 1 468 760
- EP-A1- 3 037 770
- EP-A2- 2 939 763
- WO-A1-2013/010663
- WO-A1-2015/181229
- CN-A- 105 437 426
- DE-A1- 19 740 502

## Beschreibung

Die Erfindung betrifft ein Verfahren zum Herstellen einer Kokille zum Stranggiessen von metallischen Produkten nach dem Oberbegriff des Anspruchs 1, sowie eine Kokille.

Eine Kokille zum Stahlstranggiessen von runden oder polygonalen Knüppel- und Vorblockformaten gemäss der Druckschrift EP-A-1 468 760 besteht aus einem Kupferrohr mit einer äusseren Wasserzirkulationskühlung und einem über den ganzen Umfang und im Wesentlichen über die ganze Länge versehenen Stützmantel, wobei Stütz- und/oder Verbindungsrippen das Kupferrohr am Stützmantel abstützen und zwischen diesen Kühlkanäle gebildet sind. Diese Stütz- und/oder Verbindungsrippen können Teil des Kupferrohrs bzw. des Stützmantels oder als separate Profilleisten vorgesehen sein. Sie sind vorzugsweise im Kupferrohr oder im Stützmantel durch Einfräsen der Kühlkanäle gebildet. Sie können auch im Stüzmantel durch Stützpunkte oder Abstandshalter realisiert sein.

Mit dieser spanabhebenden Bearbeitung wird nebst der aufwändigen Herstellung des Kokillenrohrs und des Wassermantels trotz der besseren Wärmeleitfähigkeit eine Schwächung der Kokillenwandung herbeigeführt. Damit reduziert sich bei zu dünnen Wandungen die Steifigkeit derselben. Mit dem vorherrschenden Wasserdruck wird eine Biegung der Wandung nach innen bewirkt, welche durch die Verbindungsrippen bzw. Nuten und durch deren Verbindung mit dem Stützmantel zu verhindern versucht wird.

Um das Ein- und Ausbauen des Kokillenrohrs in den Stützmantel zu gewährleisten, sind ausreichende Toleranzen bei den Verbindungsrippen bzw. Nuten vorzusehen, aufgrund derer jedoch die durch den Wasserdruck bewirkten Biegungen des Kokillenrohrs nicht komplett verhindert werden können.

Der vorliegenden Erfindung ist demgegenüber die Aufgabe zu Grunde gelegt worden, ein Verfahren zur Herstellung einer Kokille nach der eingangs erwähnten Gattung zu schaffen, mittels welchem zumindest das Rohr mit einer optimalen Auslegung seiner Dimensionierungen bezüglich der innenseitigen Wandstärke und der Verbindungselemente bzw. der durch diese gebildeten Kühlmitteldurchgänge als Führung des Kühlmediums ermöglicht wird.

Die Aufgabe ist erfindungsgemäss durch die Merkmale des Anspruchs 1 gelöst.

Durch das generative Herstellungsverfahren kann auf dem gesamten Aussenmantel des Rohrs oder den Aussenseiten der Teilstucke der Kokille eine die Verbindungselemente bildende Struktur erzeugt werden, welche derart ausgestaltet ist, dass mit der Führung für das zirkulierende Kuhlmedium wahrend des Giessens eine geeignete Temperatur an der Innenseite der Kokille mit einer ausreichend homogenen Verteilung in der Kokille eingestellt werden kann.

Es kann somit eine Struktur erzeugt werden, die in ihrer Ausbildung den verschiedenen Anforderungen an die Kokille beim Giessen optimal angepasst werden kann.

Sehr vorteilhaft sind das Rohr bzw. die Teilstücke der Kokille, die Struktur als auch die Ummantelung insbesondere einstückig durch dieses generative Herstellungsverfahren erzeugt. Damit kann die Kokille samt Struktur und Stützmantel insgesamt in einem Arbeitsverfahren einfach erzeugt werden.

Dieses generative Herstellungsverfahren kann auf verschiedene Weise erfolgen, besonders geeignet ist das an sich bekannte dreidimensionale Druckverfahren, welches durch ein selektives Laserschmelzen (SLM) oder Lasersintern (SLS) oder durch ein Auftragsschweissen, Elektronenstrahlschmelzen (EBW) oder ähnlichem ausgeführt werden kann.

Die Kokille nach der Erfindung zeichnet sich dadurch aus, dass mit der Erzeugung der Struktur mit verschiedenen Ausbildungsmöglichkeiten eine den Giessverhältnissen optimal angepasste Kühlgeometrie erzeugt werden kann.

Bei höheren Giessgeschwindigkeiten nimmt die vom Stahl auf die Kokille zu übertragende Wärmeleistung zu. Um die Temperaturen in den Kokillenwandungen tief zu halten, ist ein erhöhter Wärmeübergang von der Kokillenwand auf das Kühlmedium erwünscht. Wenn dies bzw. eine Erhöhung der Lebensdauer der Kokille erzielt werden soll, kann dies mit einer dünnen Wandstärke des Rohrs und einer entsprechenden Formgebung der Struktur gelöst werden.

Es kann damit gegenüber den bekannten Verbindungen des Rohrs mit dem Wassermantel durch diese Stütz- und Verbindungsrippen eine verbesserte Stützung der dünnen Wandung des Rohrs erzielt werden.

Ausfuhrungsbeispiele der Erfindung sowie weitere Vorteile derselben sind nachfolgend anhand der Zeichnung naher erlautert. Es zeigen:
Fig. 1 : einen Ausschnitt eines Eckbereichs einer erfindungsgemass hergestellten Kokille mit dem Rohr und einer Struktur einer Kokille;
Fig. 2 : einen Teilschnitt durch die Wandung einer erfindungsgemass hergestellten Kokille mit dem Rohr, der Struktur und der Ummantelung;
Fig. 3 : einen Querschnitt eines Eckbereichs der Kokille nach Fig. 2;
Fig. 4 : einen Teilschnitt durch die Wandung einer Variante einer erfindungsgemass hergestellten Kokille mit dem Rohr, der Struktur und der Ummantelung;
Fig. 5 : einen Querschnitt eines Eckbereichs der Kokille nach Fig. 4; und
Fig. 6 : eine Draufsicht eines Eckbereichs einer Kokille.

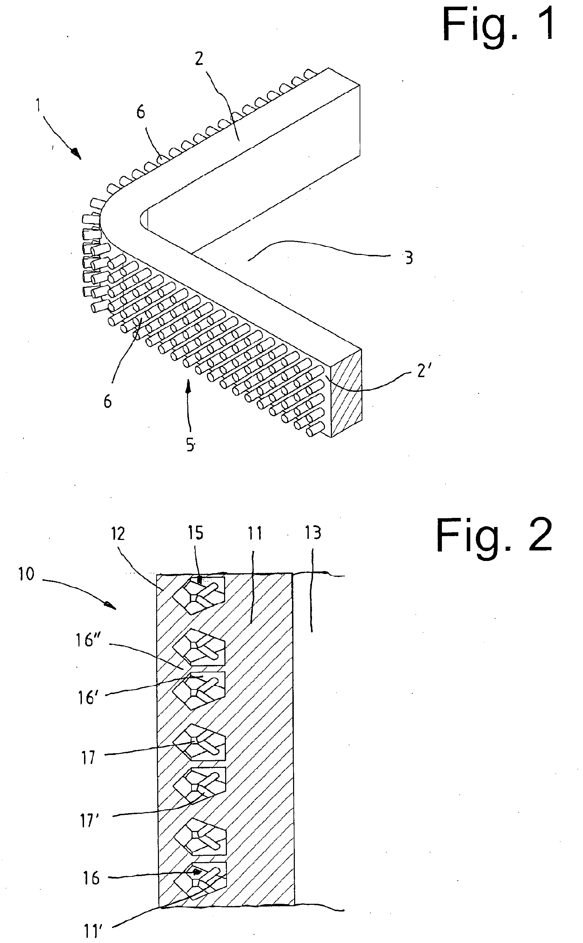

Fig. 1 zeigt eine teilweise dargestellte Kokille 1, welche zum Stranggiessen von metallischen Produkten dient und in an sich herkömmlicher Weise einen Formhohlraum 3 mit annähernd quadratischem oder rechteckigem Querschnitt aufweist. Die Kokille 1 umfasst ein einteiliges Rohr 2, eine dieses umgebende Ummantelung, die nicht gezeigt ist, sowie dazwischen Verbindungselemente 6, durch diese eine Führung für ein Kühlmedium gebildet und gleichzeitig eine Beeinflussung der Wärmeübertragung von der Kokille an das Kühlmedium durch Oberflächenvergrösserung erreicht wird.

Die Kokille 1 ist vorzugsweise zur Herstellung von Knüppeln als Langprodukte vorgesehen. Sie kann aber im Querschnitt auch andersförmig, wie zum Beispiel als Kokillenrohr für einen Vorblock mit jeweils einem rechteckigen, oktogonalen, Trapez-, Doppel-T förmigen, runden oder dergleichen Formhohlquerschnitt ausgebildet sein. Diese Kokille 1 kann in Richtung seiner Längsachse in bekannter Weise gebogen sein, was nicht näher gezeigt ist.

Grundsätzlich ist denkbar, dass die Kokille aus als Kokillenplatten gebildeten Teilstücken zum Giessen von grossen Vorblockformaten oder sogar Brammenformaten besteht.

Erfindungsgemäss ist-die Struktur 5 an den Aussenseiten 2' eines vorgefertigten Rohrs 2 nach dem generativen Herstellungsverfahren erzeugt. Als Struktur 5 sind sowohl in Längs- als auch in Umfangsrichtung in gleichen Abständen aneinandergereihte Verbindungselemente 6 um den gesamten Aussenmantel des Rohrs 2 generativ aufgebaut. Mit diesen Verbindungselementen 6 wird eine Kühlung des Rohrs bezweckt. Sie könnten zusätzlich zur Stützung einer Ummantelung dienen. Diese Verbindungselemente 6 sind dabei stiftförmig bzw. zylindrisch senkrecht an den Aussenseiten 2' vorstehend generativ erzeugt.

Diese Struktur 5 ist vorteilhaft derart ausgestaltet, dass mit der gebildeten Führung für das Kühlmedium während des Giessens eine bestimmte Wärmeübertragungsleistung des in der Kokille befindlichen Metalls auf das Kühlmedium erzielt wird.

Die nicht gezeigte Ummantelung kann dann auf herkömmliche Weise als viereckiger Hohlzylinder oder als Platten annähernd dicht an der Aussenseite dieser Verbindungselemente 6 der Struktur 5 positioniert werden, so dass das Kühlmedium zwischen diesen Stiften geführt werden kann. Diese Verbindungselemente 6 könnten selbstverständlich auch anders generativ hergestellt sein, wie zum Beispiel kegelig, mehreckig, schaumartig, gitterförmig, wabenartig oder dergleichen.

Es versteht sich von selbst, dass am oberen und am unteren Ende der Kokille entsprechende Abschlusselemente vorhanden sein müssen, damit das Kühlmedium in einem geschlossenen Kreislauf für die Führung des Kühlmediums durch die Struktur gewährleistet ist.

Die Verbindungselemente 6 könnten im Rahmen der Erfindung quer und/oder längs in Giessrichtung mit unterschiedlichen Formen bzw. Abständen zueinander versehen sein. Damit kann eine Optimierung der Kokille in Bezug auf die Kühlwirkung in Abhängigkeit des Strömungswiderstandes erzielt werden.

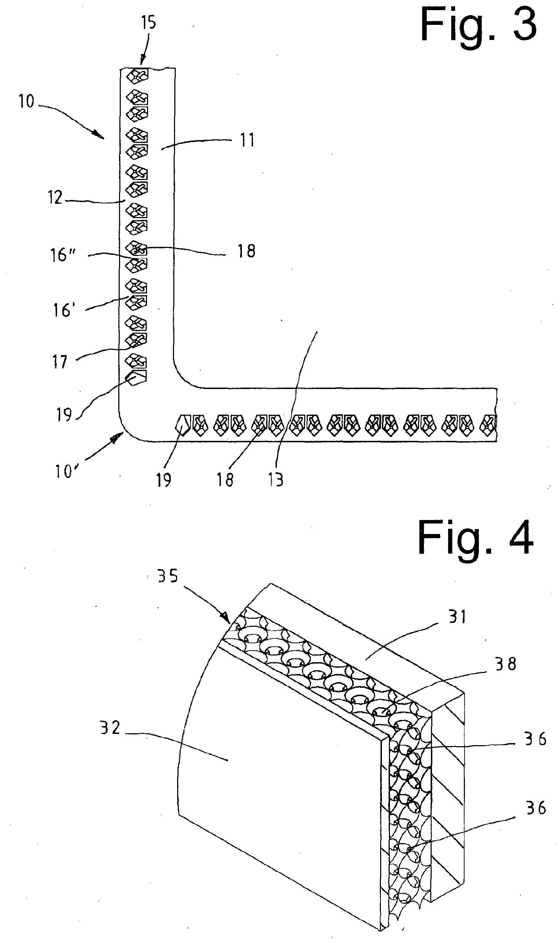

Fig. 2 und Fig. 3 zeigen eine Kokille 10 teilweise dargestellt, welche zum Stranggiessen von metallischen Produkten dient und in an sich herkömmlicher Weise einen Formhohlraum 13 mit annähernd quadratischem oder rechteckigem Querschnitt aufweist. Die Kokille 10 setzt sich aus einem einteiligen Rohr 11, einer dieses umgebenden Ummantelung 12 sowie aus dazwischenliegenden Verbindungselemente 16 zusammen, durch die eine Führung für ein Kühlmedium gebildet wird.

Erfindungsgemäss sind das Rohr 11, die Struktur 15 und auch die Ummantelung 12 einstückig durch dieses generative Herstellungsverfahren erzeugt, so dass zwischen diesen keine Unterbrechungen bestehen.

Diese Struktur 15 ist aus einer Vielzahl von in einem bestimmten Abstand zueinander angeordneten Verbindungselementen 16 generativ erzeugt, wobei diese jeweils als Kegel 16' senkrecht nach aussen auf der Aussenseite 11' des Rohrs 11 aufgebaut und beim Übergang zu dem Aussenmantel 12 wieder als Kegel 16" erweiternd ausgebildet sind. Diese Verbindungselemente 16 dienen nebst der Führung für das Kühlmedium ebenso als Stützstruktur der Ummantelung 12.

Zudem sind den Verbindungselementen 16 der Struktur 15 jeweils ein oder mehrere Verstärkungselemente 17 zugeordnet, welche als Vergabelungen mit Kegelansätzen 17' bei der Ummantelung geformt sind.

Es kann sich jedoch auch um ein vorerst konventionell gefertigtes Rohr 11 handeln, auf welchem die Struktur 15 und die Ummantelung 12 mit dem generativen Herstellungsverfahren, wie zum Beispiel ein dreidimensionales Drucken, aufgebracht werden. Durch dieses Verfahren kann dieses vorgefertigte Rohr, die Struktur und die Ummantelung als einstückige Kokille gefertigt werden.

Gemäss Fig. 3 sind diese Verbindungselemente 16 der Struktur 15 reihenweise mit gleichen Abständen zueinander angeordnet, damit die Führung für das Kühlmedium aus durchgehenden Öffnungen 18 gebildet ist, die sich annähernd parallel zu der senkrecht zur Bildebene verlaufenden Längsrichtung der Kokille 10 erstrecken. Damit ist gewährleistet, dass das Kühlmedium beispielsweise vom unteren zum oberen Ende oder umgekehrt mit einer vorgegebenen Geschwindigkeit fliessen kann. Die Struktur kann entlang des Rohres auch so ausgebildet sein, dass sich die Geschwindigkeit und Turbulenz der Strömung dem unterschiedlichen Wärmestrom entlang des Rohres anpasst.

Ferner sind die Ecken 10' der Kokille 10 zweckmässigerweise ohne Struktur aus einem Vollmaterial hergestellt. Je nach Giessformat kann in den Ecken auch eine Struktur mit Verbindungselementen für das Vorsehen einer Kühlung ausgebildet werden.

Die Formgebung der Verbindungselemente 16 der Struktur 15 kann für eine optimale Auslegung mittels einer Berechnungsmethode bestimmt werden. Diese Verbindungselemente 16 können in ihrem Querschnitt praktisch beliebig jeweils zylindrisch, kegelig, tropfenförmig und/oder andersförmig generativ geformt sein und auch ihre Abstände können je nach Auslegung variiert werden bzw. unterschiedlich lang sein.

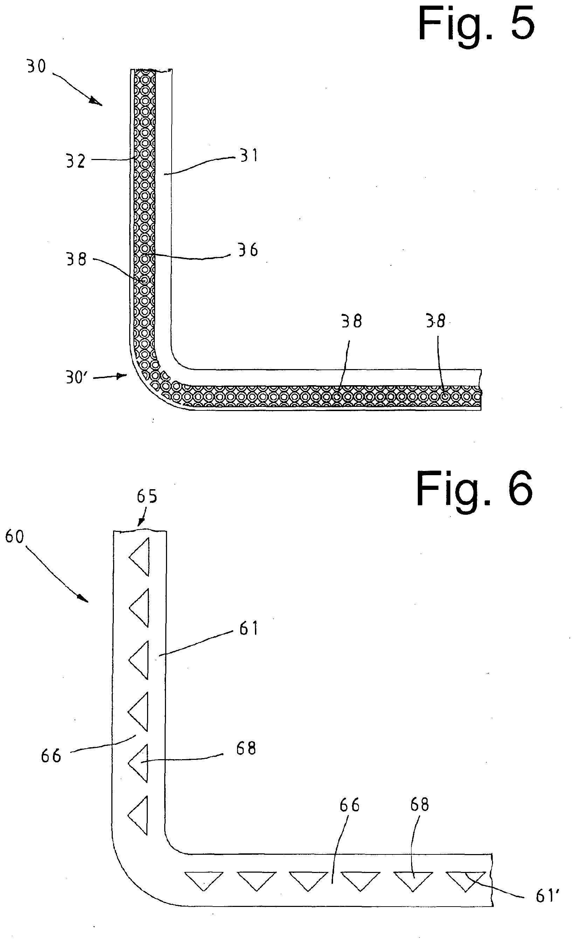

Fig. 4 und Fig. 5 zeigen eine Kokille 30, welche ähnlich wie diejenige nach Fig. 2 und Fig. 3 ausgestaltet ist. Daher werden nachfolgend nurmehr die Unterschiede erläutert.

Diese einstückige Kokille 30 ist mit einer zwischen einem Rohr 31 und einer Ummantelung 32 vorhandenen Struktur 35 mit einer schaumartigen Ausbildung versehen. Es sind dementsprechend zusammenhängende Verbindungselemente 36 mit blasenartigen Zwischenräumen 38 generativ erzeugt worden.

Gemäss Fig. 5 sind diese Verbindungselemente 36 der Struktur 35 derart ausgebildet, dass die Führung für das Kühlmedium ebenso aus durchgehenden Öffnungen 38 gebildet ist, die annähernd parallel zu der senkrecht zur Bildebene verlaufenden Längsrichtung der Kokille 10 ausgerichtet sind. Die Ecken 30' dieser Kokille 30 sind wie die Kokillenwände mit der durchgehenden Struktur 35 und der Ummantelung 32 ausgebildet.

Bei dem Ausfuhrungsbeispiel nach Fig. 6, das nicht als Teil der Erfindung gilt, ist als hauptsachlicher Unterschied zu den oben erlauterten Varianten vorgesehen, dass die generativ hergestellte Kokille 60 mit dem Rohr 61, der Ummantelung 62 und der Struktur 65 mit Verbindungselementen 66 als langliche Wandungsabschnitte mit dazwischenliegenden Langskanalen 68 gebildet ist. Diese Verbindungselemente 66 verlaufen nicht quer, sondern entlang dem Aussenmantel 61' des Rohrs 61, vorzugsweise parallel zu der Giessachse der Kokille 60. Die Fuhrung des Kuhlmediums ist entsprechend durch jeden einzelnen Langskanal 68 bestimmt.

Diese Längskanäle 68 können entsprechend dem Querschnitt der Verbindungselemente 66 mit einem definierten Querschnitt, zum Beispiel wie dargestellt dreieckig, rund, oval, mehreckig oder ähnlichem, versehen sein.

Dieser Querschnitt kann entlang des Rohres variieren, so dass sich die Geschwindigkeit des Wassers und der Wärmeübergangskoeffizient darin ändern. Dies ermöglicht den Wärmeübergangskoeffizienten an dem im oberen Bereich der Kokille beim Giessen durch den Badspiegel gebildete Meniskus höher als in den anderen Bereichen auszulegen, so dass das Rohr im Meniskus möglichst kühl gehalten werden kann.

Diese länglichen Wandungsabschnitte der Struktur 65 könnten auch derart geformt sein, dass die Längskanäle in einer oder mehreren Reihen nebeneinander verlaufend ausgebildet sind.

Mit diesem generativen Herstellungsverfahren werden zumindest die Struktur schichtweise auf den Aussenmantel aufgetragen, bei dem eine Verbindung des aufgetragenen Materials mit demjenigen des Rohrs erzeugt wird. Es kann sich dabei um das bei Kokillen insbesondere verwendeten Kupfermaterial handeln. Es könnte aber auch andere Metalle, wie Aluminium, keramisches Material, Kunststoff oder eine Kombination aus diesen verwendet werden.

Das Auftragen bei dieser generativen Herstellung erfolgt durch Schmelzen oder durch Sintern des aufzutragenden Materials. Die kann durch das an sich bekannte dreidimensionale Druckverfahren ausgeführt werden. Es eignen sich dafür das selektive Laserschmelzen (SLM) oder Lasersintern (SLS) oder ähnlichem, oder Auftragsschweissen, Elektronenstrahlschmelzen (EBW) oder ähnlichem.

Die Erfindung ist mit den obigen Ausführungsbeispielen ausreichend dargetan. Sie könnte aber noch durch eine weitere andere Varianten erläutert sein.

So könnte anstelle eines Rohrs 61 wie oben erwähnt jeweils auch eine aus mehreren Teilstücken beispielsweise aus Platten zusammengesetzte Kokille mit der erfindungsgemässen generativen Herstellung erzeugt werden. Diese würde die Erzeugung dieser Aufbauten der entsprechenden Struktur vereinfachen.

Es lasst sich dieses generative Herstellungsverfahren auch bei den Innenseiten des Rohrs bzw. der Teilstucke der Kokille anwenden. Damit kann das Kokillenrohr zumindest stellenweise innenseitig mit einer die Struktur bildenden Beschichtung versehen werden, welche vorzugsweise aus einem verschleissfesten Material besteht.

Zudem kann ein benutztes Rohr innenseitig nach einer gewissen betrieblichen Einsatzdauer durch eine Bearbeitung der verschlissenen Flächen und einem generativen Auftragen eines sich mit der Innenseite verbindenden Materials repariert werden.

Ausserdem können das Rohr und/oder die Struktur der Kokille mit Schichten mit unterschiedlichen Wärmeübergangskoeffizienten hergestellt sein. Damit kann dieser Wärmeübergangskoeffizient zwischen dem Kokillenmaterial und dem Kühlmedium gezielt beeinflusst werden.

## Patentansprüche

1. Verfahren zum Herstellen einer Kokille zum Stranggiessen von metallischen Produkten, mit einer Kokille aus einem einteiligen Rohr (2, 11, 31) oder aus mehreren vorzugsweise als Kokillenplatten gebildeten Teilstücken, **dadurch gekennzeichnet, dass**
zumindest auf den Aussen seiten des Rohrs (2, 11, 31) bzw. der Teilstücke eine Struktur (5, 15, 35) durch ein generatives Herstellungsverfahren erzeugt wird, wobei auf den Aussenseiten des Rohrs (2, 11, 31) bzw. der Teilstücke die Struktur (5, 15, 35) bildenden Verbindungselemente (6, 16, 36) durch dieses generative Herstellungsverfahren erzeugt werden, *wobei die Struktur (5, 15, 35) aus einer Vielzahl von in Längs- als auch in Umfangsrichtung in Abständen aneinandergereihten Verbindungselementen (6, 16, 16') versehen ist, wobei diese Verbindungselemente (6, 16, 36) auf den Aussenseiten des Rohrs (2, 11, 31) bzw. der Teilstücke für die Führung eines Kühlmediums zugeordnet sind*.

2. Verfahren nach Anspruch 1, **dadurch gekennzeichnet, dass** das Rohr (2, 11, 31) bzw. die Teilstücke der Kokille, die Struktur (5, 15, 35) bildenden Verbindungselemente (6, 16, 36) und auch eine letztere umgebende Ummantelung (12, 32) insbesondere einstückig durch dieses generative Herstellungsverfahren erzeugt werden.

3. Verfahren nach Anspruch 2, **dadurch gekennzeichnet, dass** mit diesem generativen Herstellungsverfahren die Verbindungselemente (6, 16, 36 ) schichtweise auf den Aussenseiten (11') aufgetragen wird, bei dem eine Verbindung des aufgetragenen Materials mit demjenigen des Rohrs (11, 31) erzeugt wird.

4. Verfahren nach Anspruch 1, **dadurch gekennzeichnet, dass** die Verbindung des aufgetragenen Materials mit demjenigen des Rohrs (2, 11, 31 ) durch Schmelzen oder durch Sintern des aufzutragenden Materials erzeugt wird.

5. Verfahren nach Anspruch 1, **dadurch gekennzeichnet, dass** bei einem generativen Herstellungsverfahren der Innenseiten des Rohrs bzw. der Teilstücke zumindest eine die Struktur bildende Beschichtung der Kokille aufgetragen wird, wobei dieses generative Herstellungsverfahren als Reparatur einer benutzten Kokille ausgeführt werden kann.

6. Verfahren nach einem der vorhergehenden Ansprüche 1 bis 5, **dadurch gekennzeichnet, dass** dieses generative Herstellungsverfahren als dreidimensionales Druckverfahren erfolgt, welches durch ein selektives Laserschmelzen SLM oder Lasersintern SLS ausgeführt wird.

7. Verfahren nach einem der vorhergehenden Ansprüche 1 bis 5, **dadurch gekennzeichnet, dass** dieses generative Herstellungsverfahren als dreidimensionales Druckverfahren erfolgt, welches durch ein Auftragsschweissen oder Elektronenstrahlschmelzen EBW ausgeführt wird.

8. Kokille zum Stranggiessen von metallischen Produkten, die nach dem Verfahren nach einem der vorhergehenden Ansprüche 1 bis 7 hergestellt ist, **dadurch gekennzeichnet, dass**
zumindest auf Aussenseiten eines Rohrs (2, 11, 31) bzw. von Teilstücken eine aus Verbindungselementen (6, 16, 36) gebildete Struktur (5, 15, 35) erzeugt ist, *wobei die Struktur* (5, 15, 35) *aus einer Vielzahl von in Längs- als auch in Umfangsrichtung in Abständen aneinandergereihten Verbindungselementen (16') erzeugt ist, wobei diese Verbindungselemente auf den Aussenseiten des Rohrs bzw. der Teilstücke für die Führung eines Kühlmediums zugeordnet sind.*

9. Kokille nach Anspruch 8, **dadurch gekennzeichnet, dass** diese Struktur (5, 15, 35) als Stützstruktur für eine Ummantelung (12, 32) oder nur als Führung für ein Kühlmedium vorgesehen ist.

10. Kokille nach Anspruch 8 oder 9, **dadurch gekennzeichnet, dass** das Rohr (11, 31) bzw. die Teilstücke der Kokille, die Struktur (15, 35) und die Ummantelung (12, 32) einstückig erzeugt sind.

11. Kokille nach Anspruch 8, **dadurch gekennzeichnet, dass** die Struktur (15, 35) an einem Aussenmantel (11') des vorgefertigten Rohrs oder an den Aussenseiten der vorgefertigten Teilstücke schichtweise aufgebracht ist.

12. Kokille nach Anspruch 8, **dadurch gekennzeichnet, dass** diese Verbindungselemente (16') der Struktur (15) jeweils zylindrisch oder kegelig als Stifte generativ geformt sind.

13. Kokille nach einem der vorhergehenden Ansprüche 8 bis 12, **dadurch gekennzeichnet, dass** den Verbindungselementen (16) der Struktur (15) jeweils ein oder mehrere Verstärkungselemente (17) zugeordnet sind, welche mit der Ummantelung (12) und/oder dem Rohr (11) verbunden sind.

## Claims

1. Method for the manufacture of a mould for continuous casting of metallic products, comprising a mould of a one-piece tube (2, 11, 31) or of a plurality of parts preferably formed as mould plates, **characterized in that**
at least on the outer sides of the tube (2, 11, 31) respectively of the parts a structure (5, 15, 35) is produced by a generative manufacturing process, whereby on the outer sides of the tube (2, 11, 31) respectively of the parts the structure (5, 15, 35) forming by the connecting elements (6, 16, 36) are produced by this generative manufacturing process, whereby the structure (5, 15, 35) is produced from a multiplicity of connecting elements (6, 16, 16') arranged one another in the longitudinal as well as in the circumferential direction at interval, whereby these connecting elements (6, 16, 36) on the outer sides of the tube (2, 11, 31) respectively the parts are assigned for the guidance of a cooling medium.

2. A method according to claim 1, **characterized in that** the tube (2, 11, 31) respectively the parts of the mould, the structure (5, 15, 35) forming the connecting elements (6, 16, 36) and also a latter surrounding sheath (12, 32) in particular are produced as one-piece by this generative manufacturing process.

3. A method according to claim 2, **characterized in that** with this generative manufacturing process, the connecting elements (6, 16, 36) are applied in layers on the outer sides (11'), with which a compound of the applied material with that of the tube ( 11, 31) is produced.

4. A method according to claim 1, **characterized in that** the compound of the applied material with that of the tube (2, 11, 31) is produced by melting or by sintering of the material to be applied.

5. A method according to claim 1, **characterized in that** with a generative manufacturing process of the inner sides of the tube respectively of the parts at least the one the structure forming coating of the mould is applied, whereby this generative manufacturing process can be made as repair of a used mould.

6. Method according to any one of the preceding claims 1 to 5, **characterized in that** this generative manufacturing process is carried out as three-dimensional printing process, which is made by a selective laser melting SLM or laser sintering SLS.

7. A method according to any one of the preceding claims 1 to 5, **characterized in that** this generative manufacturing process is carried out as three-dimensional printing process, which is made by a deposition welding or electron beam melting EBW.

8. A mould for continuous casting of metallic products, which is manufactured by the method according to any one of the preceding claims 1 to 7, **characterized in that**
at least on outer sides of the tube (2, 11, 31) respectively of the parts one of connecting elements (6, 16, 36) formed structure (5, 15, 35) is produced, whereby the structure (5, 15, 35) is produced from a multiplicity of connecting elements (16') arranged one another in the longitudinal as well as in the circumferential direction at interval, whereby these connecting elements on the outer sides of the tube respectively the parts are assigned for the guidance of a cooling medium.

9. A mould according to claim 8, **characterized in that** this structure (5, 15, 35) is provided as a supporting structure for a surrounding sheath (12, 32) or only as guide for a cooling medium.

10. A mould according to claim 8 or 9, **characterized in that** the tube (11, 31) respectively the parts of the mould, the structure (15, 35) and the surrounding sheath (12, 32) are formed as one-piece.

11. A mould according to claim 8, **characterized in that** the structure (15, 35) is applied in layers on the outer shell (11') of the prefabricated tube or on the outer sides of the prefabricated parts.

12. A mould according to claim 8, **characterized in that** these connecting elements (16') of the structure (15) are generative formed each cylindrical or conical as pins.

13. A mould according to any one of the preceding claims 8 to 12, **characterized in that** the connecting elements (16) of the structure (15) are each associated with one or more reinforcing elements (17), which are connected to the surrounding sheath (12) and/or the tube (11).

## Revendications

1. Procédé de fabrication d'une lingotière pour la coulée continue de produits métalliques, ayant une lingotière en un tuyau (2, 11, 31) d'une pièce ou en plusieurs pièces constituées, de préférence, sous forme de plaques de lingotière, **caractérisé en ce que**
l'on produit, par un procédé de fabrication génératif, au moins sur les faces extérieures du tuyau (2, 11, 31) ou des pièces, une structure (5, 15, 35), dans lequel on produit, sur les faces extérieures du tuyau (2, 11, 31) ou des pièces, des éléments (6, 16, 36) de liaison formant la structure (5, 15, 35) par ce procédé de fabrication génératif, la structure (5, 15, 35) étant pourvue d'une pluralité d'éléments (6, 16, 16') de liaison rangés à distance les uns des autres tant dans la direction longitudinale que dans la direction périphérique, ces éléments (6, 16, 36) de liaison étant associés sur les faces extérieures du tuyau (2, 11, 31) ou des pièces pour conduire un fluide de refroidissement.

2. Procédé suivant la revendication 1, **caractérisé en ce que** l'on produit le tuyau (2, 11, 31) ou les pièces de la lingotière, les éléments (6, 16, 36) de liaison formant la structure (5, 15, 35) et également une enveloppe (12, 32) entourant ces derniers, notamment d'une seule pièce, par ce procédé de fabrication génératif.

3. Procédé suivant la revendication 2, **caractérisé en ce que**, par ce procédé de fabrication génératif, on dépose les éléments (6, 16, 36) de liaison couche par couche sur les faces (11') extérieures, en produisant une liaison du matériau déposé avec celui du tuyau (11, 31).

4. Procédé suivant la revendication 1, **caractérisé en ce que** l'on produit la liaison du matériau déposé avec celui du tuyau (2, 11, 31) par fusion ou par frittage du matériau à déposer.

5. Procédé suivant la revendication 1, **caractérisé en ce que**, dans un procédé de fabrication génératif des faces intérieures du tuyau ou des pièces, on dépose au moins un revêtement formant la structure de la lingotière, ce procédé de fabrication génératif pouvant être utilisé pour réparer une lingotière utilisée.

6. Procédé suivant l'une des revendications 1 à 5 précédentes, **caractérisé en ce que** ce procédé de fabrication génératif s'effectue sous la forme d'un procédé d'impression en trois dimensions, qui est réalisé par une fusion laser sélective SLM ou par une fusion laser SLS.

7. Procédé suivant l'une des revendications 1 à 5 précédentes, **caractérisé en ce que** ce procédé de fabrication génératif s'effectue sous la forme d'un procédé d'impression en trois dimensions, qui est réalisé par un soudage à superposition ou par un soudage par faisceau d'électrons EBW.

8. Lingotière de coulée continue de produits métalliques, qui est fabriquée par le procédé suivant l'une des revendications 1 à 7 précédentes, **caractérisée en ce qu'**une structure (5, 15, 35), formée d'éléments (6, 16, 36) de liaison, est produite au moins sur des faces extérieures d'un tuyau (2, 11, 31) ou de pièces, la structure (5, 15, 35) étant pourvue d'une pluralité d'éléments (16') de liaison rangés à distance les uns des autres tant dans la direction longitudinale que dans la direction périphérique, ces éléments de liaison étant associés su les faces extérieures du tuyau ou des pièces pour conduire un fluide de refroidissement.

9. Lingotière suivant la revendication 8, **caractérisée en ce que** cette structure (5, 15, 35) est prévue comme structure d'appui d'une enveloppe (12, 32) ou seulement comme conduite d'un fluide de refroidissement.

10. Lingotière suivant la revendication 8 ou 9, **caractérisée en ce que** le tuyau (11, 31) ou les pièces de la lingotière, la structure (15, 35) et l'enveloppe (12, 32) sont produits en une pièce.

11. Lingotière suivant la revendication 8, **caractérisée en ce que** la structure (15, 35) est déposée couche par couche sur une enveloppe (11') extérieure du tuyau préfabriqué ou sur les faces extérieures des pièces préfabriquées.

12. Lingotière suivant la revendication 8, **caractérisée en ce que** ces éléments (16') de liaison de la structure (15) sont formés générativement, chacun en étant cylindrique ou conique sous la forme de tiges.

13. Lingotière suivant l'une des revendications 8 à 12 précédentes, **caractérisée en ce qu'**aux éléments (16) de liaison de la structure (15), sont associés, respectivement, un ou plusieurs éléments (17) de renfort, qui sont reliés à l'enveloppe (12) et/ou au tuyau (11).
